# EUROPEAN PATENT APPLICATION

(11) **EP 3 726 877 A1**
(43) Date of publication of application: **21.10.2020**
(21) Application number: 20176026.1
(22) Date of filing: 29.01.2016
(51) Int. Cl.: H04W 24/10, H04L 5/00, H04L 1/00, H04W 72/04

(54) **USER TERMINAL, RADIO COMMUNICATION SYSTEM, AND RADIO COMMUNICATION METHOD FOR CSI REPORTING**

(30) Priority: 29.01.2015 JP 2015015924
(62) Divisional of application: 16743515.5
(71) Applicant: NTT DOCOMO, INC., Chiyoda-ku Tokyo 100-6150 (JP)
(72) Inventor: Takeda, Kazuki, Tokyo, 100-6150 (JP); Uchino, Tooru, Tokyo, 100-6150 (JP); Takeda, Kazuaki, Tokyo, 100-6150 (JP); Nagata, Satoshi, Tokyo, 100-6150 (JP)
(74) Representative: Hoffmann Eitle

(57) **Abstract**

A user terminal comprises a receiving section that receives an indication to transmit channel state information (CSI) of at least one serving cell and a transmitting section that transmits the CSI based on the indication to transmit the CSI, wherein if the user terminal is configured with six or more cells, the receiving section receives a specific downlink control channel including more than two bits of CSI triggering in a user terminal-specific search space of the specific downlink control channel configured by a radio base station and performs blind decoding, and the receiving section receives a downlink control channel including one bit of CSI triggering in a common search space.

## Description

### TECHNICAL FIELD

The present invention relates to a user terminal, a radio base station, a radio communication system, and a radio communication method for a next-generation mobile communication system.

### BACKGROUND ART

For the universal mobile telecommunication system (UMTS) network, the long term evolution (LTE) has been specified for further enhanced data rates and lower delay (see Non-Patent Literature 1). The LTE advanced (also referred to as LTE Rel.10, 11, or 12) has been specified for achieving even wider bands and higher speed than those of LTE (also referred to as LTE Rel.8), and the succeeding systems (also referred to as LTE Rel.13, for example) are under study.

The system band LTE Rel.10/11 includes at least one component carrier (CC) that uses an LTE Rel.8 system band as one unit. Band expansion through the aggregation of multiple component carriers is referred to as carrier aggregation (CA).

LTE Rel.8 to Rel.12 have been specified assuming the exclusive use of frequency bands given to particular providers, i.e., licensed bands. For licensed bands, 100MHz, 800 MHz, 2 GHz, and 1.7 GHz, for example, are used.

LTE Rel.13 or later also target the use of frequency bands that are not exclusive to particular providers, i.e., unlicensed bands. Unlicensed bands include 300MHz and 2.4 GHz and 5 GHz, which are the same bands as Wi-Fi. LTE Rel.13 aims at carrier aggregation of licensed bands and unlicensed bands (license-assisted access (LAA)).

### CITATION LIST

### NON-PATENT LITERATURE

[Non Patent Literature 1]
3GPP TS 36.300 Rel.8 "Evolved Universal Terrestrial Radio Access (E-UTRA) and Evolved Universal Terrestrial Radio Access Network (E-UTRAN); Overall description; Stage 2"

### SUMMARY OF INVENTION

### TECHNICAL PROBLEM

Carrier aggregation according to LTE Rel.10 to Rel.12 limits the maximum number of component carriers that can be allocated to each user terminal to five. Carrier aggregation according to LTE Rel.13 or later aims at allocation of a larger number of, i.e., at least six (e.g., 16 or 32) component carriers to each user terminal in order to further extend bands.

When the number of CCs that can be allocated to each user terminal is increased to six or more (e.g., 32), the transmission schemes of existing systems (Rel.10-12) can be barely used as they are. For example, existing systems support the aperiodic CSI report scheme in which a user terminal transmits channel state information (CSI) in accordance with transmission instructions from radio base stations.

However, since existing systems assume the use of up to five component carriers, if an existing system is used as it is when the number of component carriers is increased to six or more, flexible aperiodic CSI reporting may not be performed in accordance with the increased number of component carriers.

An object of the present invention, which has been made to solve this problem, is to provide a user terminal, a radio base station, a radio communication system, and a radio communication method that enable flexible aperiodic CSI reporting even with a larger number of component carriers that can be allocated to each user terminal than in an existing system.

### SOLUTION TO PROBLEM

A user terminal of this invention communicates with a radio base station through a plurality of serving cells in different component carriers. The user terminal includes: a receiving section that receives an uplink scheduling grant including an instruction to transmit channel state information of a cell set of at least one serving cell; and a transmitting section that transmits channel state information of a different cell set through a physical uplink shared channel designated by the uplink scheduling grant, depending on the uplink scheduling grant.

### ADVANTAGEOUS EFFECT OF INVENTION

The present invention enables flexible aperiodic CSI reporting even with a larger number of component carriers that can be allocated to each user terminal than in an existing system.

### BRIEF DESCRIPTION OF DRAWINGS

[Figure 1] Figure 1 is a diagram for explaining carrier aggregation.
[Figure 2] Figure 2 is a diagram for explaining a 2-bit A-CSI trigger.
[Figure 3] Figure 3 is a diagram for explaining an example of aperiodic CSI reporting according to Embodiment 1.1.
[Figure 4] Figure 4 is a diagram for explaining an example of aperiodic CSI reporting according to Embodiment 1.2.
[Figure 5] Figure 5 is a diagram for explaining an example of aperiodic CSI reporting according to Embodiment 1.3.
[Figure 6] Figure 6 is a diagram for explaining an example of aperiodic CSI reporting according to Embodiment 1.4.
[Figure 7] Figure 7 is a diagram for explaining a TDD-based UL/DL configuration.
[Figure 8] Figure 8 is a diagram for explaining an example of aperiodic CSI reporting according to Embodiment 2.
[Figure 9] Figure 9 is a diagram for explaining an example of aperiodic CSI reporting according to Embodiment 3.
[Figure 10] Figure 10 is a diagram showing an example of a schematic configuration of a radio communication system according to this embodiment.
[Figure 11] Figure 11 is a diagram showing an example of an overall configuration of a radio base station according to this embodiment.
[Figure 12] Figure 12 is a diagram showing an example of a functional structure of a radio base station according to the embodiment.
[Figure 13] Figure 13 is a diagram showing an example of an overall configuration of the user terminal according to this embodiment.
[Figure 14] Figure 14 is a diagram showing an example of a functional configuration of the user terminal according to the embodiment.

### DESCRIPTION OF EMBODIMENTS

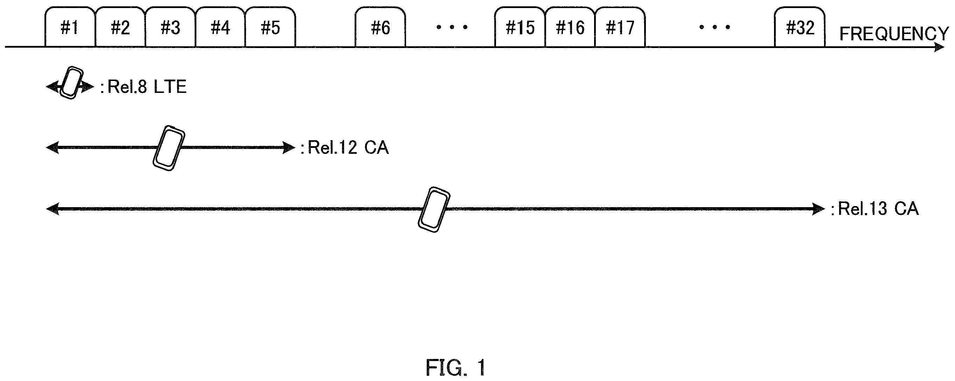

Figure 1 is a diagram for explaining carrier aggregation (CA). As shown in Figure 1, CA according to LTE Rel.12 or earlier bundles up to five (CC #1-CC #5) component carriers (CCs) that use an LTE Rel.8 system band as one unit. To be specific, carrier aggregation according to LTE Rel.12 or earlier limits the maximum number of CCs that can be allocated to each user terminal (UE: user equipment) to five.

Meanwhile, carrier aggregation according to LTE Rel.13 aims at bundling six or more CCs for further band extension. In particular, carrier aggregation according to LTE Rel.13 aims at increasing the number of CCs that can be allocated to each user terminal to six or more (CA enhancement). For example, as shown in Figure 1, when 32 CCs (CC #1-CC #32) are bundled, a band of up to 640 MHz can be ensured.

Thus, increasing the number of CCs that can be allocated to each user terminal is expected to achieve more flexible higher-speed radio communication. Such an increase in the number of CCs is also effective in band extension due to carrier aggregation (license-assisted access (LAA)) between a licensed band and an unlicensed band. For example, when five CCs in a licensed band (=100 MHz) and 15 CCs in an unlicensed band (=300 MHz) are bundled, a 400 MHz band can be ensured.

By the way, LTE Rel.10 to Rel.12 support aperiodic CSI reporting in which a user terminal transmits channel state information (CSI) in accordance with transmission instructions from radio base stations. A transmission instruction from a radio base station (hereinafter referred to as A-CSI trigger) is included in an uplink scheduling grant (hereinafter referred to as uplink grant (UL grant)) transmitted through a physical downlink control channel (PDCCH).

In aperiodic CSI reporting, the user terminal transmits CSI through a physical uplink shared channel (PUSCH) designated by the UL grant in accordance with an A-CSI trigger included in an UL grant. It should be noted that CSI transmitted in accordance with an A-CSI trigger included in an UL grant may be referred to as aperiodic CSI (A-CSI). CSI includes at least one of a channel quality indicator (CQI), a precoding matrix indicator (PMI), and a rank indicator (RI).

In aperiodic CSI reporting, an A-CSI trigger included in an UL grant has 1 or 2 bits. To be specific, an UL grant transmitted through a common search space (C-SS) includes a 1-bit A-CSI trigger. Meanwhile, a user terminal specific search space (UE-SS) includes a 2-bit A-CSI trigger.

A 1-bit A-CSI trigger instructs whether or not CSI is transmitted. For example, an A-CSI trigger with a value of "0" instructs no CSI transmission, and that with a value of "1" instructs transmission of CSI of a serving cell that transmits a PUSCH.

Meanwhile, a 2-bit A-CSI trigger instructs whether or not CSI is transmitted and CSI of which serving cells are transmitted. Carrier aggregation according to LTE Rel.10 to Rel. 12 supports 2-bit A-CSI triggers.

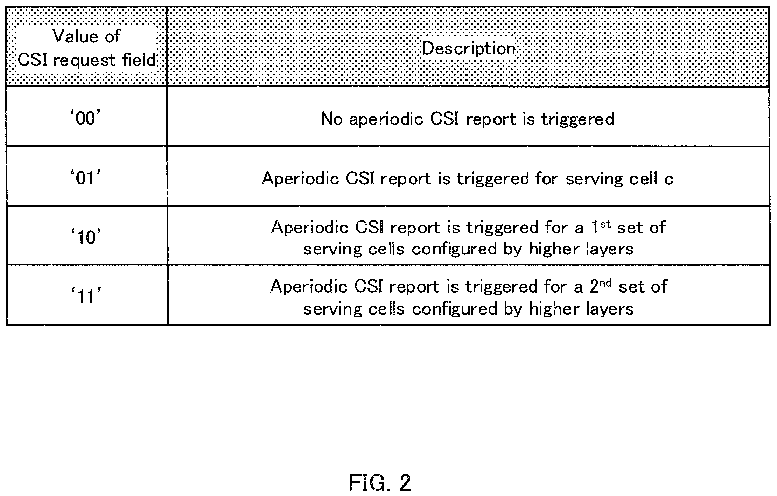

Figure 2 is a diagram for explaining an example of a 2-bit A-CSI trigger. For example, referring to Figure 2, an A-CSI trigger (also referred to as CSI Request field) with a value of "00" instructs no CSI transmission, and that with a value of "01" instructs transmission of CSI of a serving cell (CC) that transmits a PUSCH. Those with values of "10" and "11" instruct transmission of CSI of the first and second sets of serving cells, respectively.

It should be noted that a set of serving cells is a group of serving cells consisting of at least one serving cell. Referring to Figure 2, a radio base station sends information on the serving cells in the first and second sets of serving cells to the user terminal in advance through higher-layer signaling such as RRC signaling.

In such aperiodic CSI reporting, if the number of CCs that can be allocated to each user terminal is increased to six or more, the user terminal cannot possibly report CSI blocks corresponding to the increased number of CCs. This is because carrier aggregation according to LTE Rel.10 to Rel. 12 limits the CSI process number, which is the number of blocks of CSI that an A-CSI trigger can report at once, to the number of CCs that can be allocated to each user terminal (=5).

Even if an A-CSI trigger can report six or more CSI blocks at once, controlling the report of CSI blocks corresponding to the increased number of CCs by using a 2-bit A-CSI trigger may impair the flexibility of aperiodic CSI reporting. This is because an A-CSI trigger shown in Figure 2 can only instruct CSI transmission through two sets of serving cells indicated by the values "10" and "11".

For example, if the number of CCs that can be allocated to each user terminal is increased to 32, serving cells of 16 CCs are assumed to be assigned to each of the first and second sets of serving cells indicated by the A-CSI trigger values "10" and "11" (e.g., CCs #1 to #16 to the first set of serving cells, and CCs #17 to #32 to the second set of serving cells). However, in this case, a radio base station trying to instruct transmission of CSI of four serving cells of CCs #1 to #4 has no choice but to instruct transmission of CSI of the first set of serving cells (CCs #1 to #16) by using the A-CSI trigger value "10".

In this manner, a 2-bit A-CSI trigger controls transmission of CSI with only two sets of serving cells indicated by the values "10" and "11". Accordingly, if the number of CCs that can be allocated to each user terminal is increased to six or more, transmission of CSI of serving cells of target CCs cannot possibly be flexibly performed.

To solve this problem, the present inventors have arrived at an idea of ensuring the flexibility of aperiodic CSI reporting which supports the increased number of CCs by increasing the number of types of serving cell set indicated by A-CSI triggers, in the case where the number of CCs that can be allocated to each user terminal is increased to six or more. To be specific, they have arrived at an idea of increasing the number of types of serving cell set without increasing the bit count of the A-CSI trigger (Embodiments 1 and 2), and an idea of increasing the number of types of serving cell set by increasing the bit count of the A-CSI trigger (Embodiment 3).

Embodiments will now be described in detail. The following description is based on the case where carrier aggregation involves, but not exclusively, 32 CCs that can be allocated to each user terminal. Serving cells refer to the cells in each CC that can be allocated to the user terminal. A serving cell set (cell set) is a group of serving cells which consists of at least one serving cell. In the following description, a serving cell set is supposed to include a plurality of serving cells in different CCs but may include a plurality of serving cells in the same CC.

### (Embodiment 1)

In aperiodic CSI reporting according to Embodiment 1, upon reception of an UL grant including an instruction (e.g., an A-CSI trigger with the value "10" or "11") to transmit CSI of a set of serving cells, the user terminal transmits CSI of a different set of serving cells, depending on the UL grant. In particular, the user terminal transmits CSI of sets of serving cells that differ in the frequency direction (Embodiments 1.1 and 1.2) in accordance with the UL grant, or sets of serving cells that differ in the time direction (Embodiments 1.3 and 1.4) in accordance with the UL grant.

### (Embodiment 1.1)

In aperiodic CSI reporting according to Embodiment 1.1, the user terminal transmits CSI of a different set of serving cells, depending on through which serving cell (CC) the UL grant including the A-CSI trigger is transmitted. In the case of uplink carrier aggregation, it is assumed that a UL grant is transmitted by a plurality of serving cells (CCs). For this reason, a radio base station instructs to transmit CSI of different sets of serving cells by transmitting UL grants including A-CSI triggers through different serving cells (CCs).

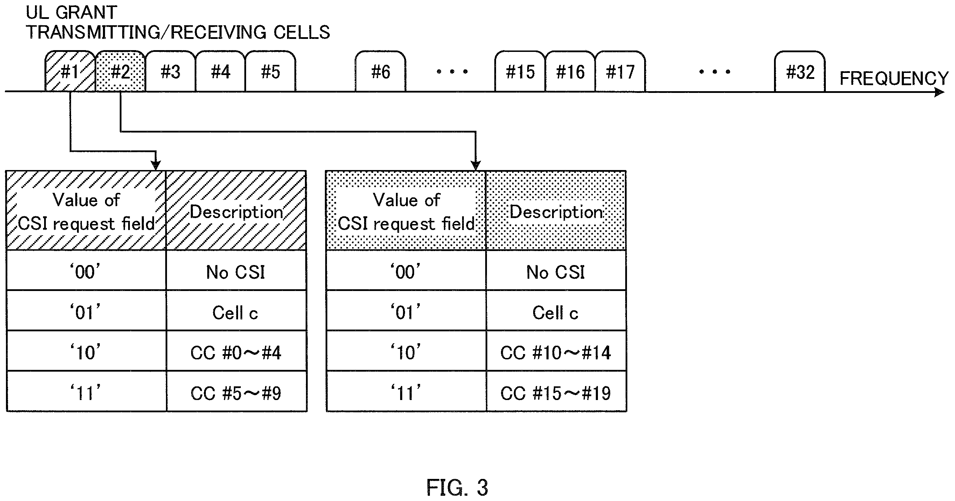

Figure 3 is a diagram for explaining an example of aperiodic CSI reporting according to Embodiment 1.1. Referring to Figure 3, upon reception (detection) of a UL grant including an A-CSI trigger at a primary cell (a serving cell in CC #1), the user terminal determines that an instruction is made to transmit CSI of sets of serving cells, CCs #0 to #4, if the A-CSI trigger has a value of "10", and determines that an instruction is made to transmit CSI of sets of serving cells, CCs #5 to #9, if the A-CSI trigger has a value of "11".

Meanwhile, upon reception of a UL grant including an A-CSI trigger at a secondary cell (a serving cell in CC #2), the user terminal determines that an instruction is made to transmit CSI of sets of serving cells, CCs #10 to #14, if the A-CSI trigger has a value of "10", and determines that an instruction is made to transmit CSI of sets of serving cells, CCs #15 to #19, if the A-CSI trigger has a value of "11".

Referring to Figure 3, a network (e.g., a radio base station) sends information that associates a serving cell (CC), the A-CSI trigger value, and a set of serving cells with each other, to the user terminal through higher-layer signaling such as RRC signaling. Upon reception of a UL grant including the A-CSI trigger at the serving cell, the user terminal determines CSI of which set of serving cells should be transmitted based on the A-CSI trigger value, in accordance with the information sent through higher-layer signaling.

Thus, even if the A-CSI triggers included in the UL grants have the same value (e.g., "10"), the user terminal determines that CSI of different sets of serving cells should be transmitted, depending on through which serving cells the UL grants are received (detected). Accordingly, in the case of uplink carrier aggregation, the number of sets of serving cells the CSI of which can be reported can be increased without increasing the number of bits of an A-CSI trigger. Consequently, the flexibility of aperiodic CSI reporting can be ensured even if the number of CCs (the number of serving cells) that can be allocated to each user terminal is increased to six or more.

### (Embodiment 1.2)

In aperiodic CSI reporting according to Embodiment 1.2, a user terminal transmits CSI of a different set of serving cells, depending on through which serving cell (CC) a PUSCH designated by the UL grant including the A-CSI trigger is transmitted. In the case of uplink carrier aggregation, it is assumed that a PUSCH is assigned to a plurality of serving cells (CCs). For this reason, a radio base station instructs to transmit CSI of different sets of serving cells by adding A-CSI triggers to a plurality of UL grants to which PUSCHs of different serving cells (CCs) are assigned. It should be noted that the plurality of UL grants may be transmitted by a single CC through cross carrier scheduling or by a plurality of CCs.

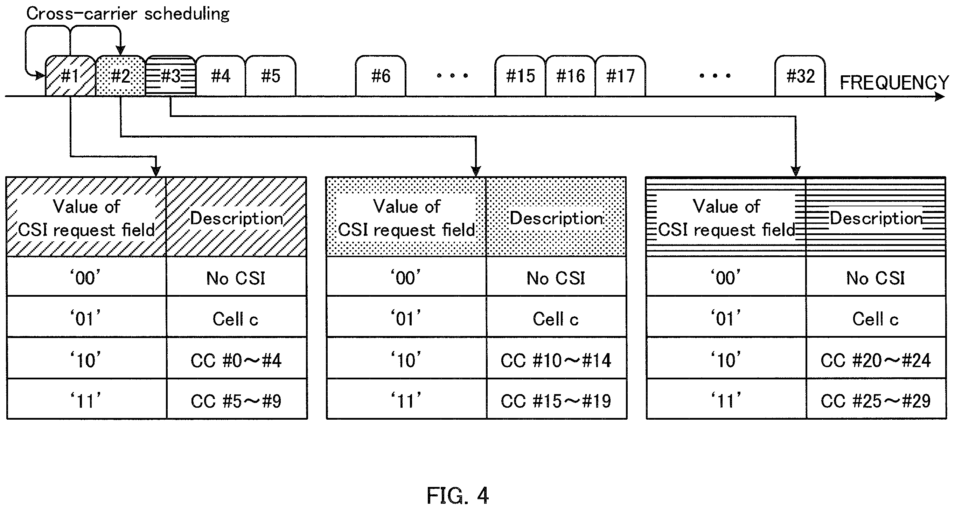

Figure 4 is a diagram for explaining an example of aperiodic CSI reporting according to Embodiment 1.2. In Figure 4, CCs #1 and #2 are intended for uplink cross carrier scheduling starting from CC #1. In contrast, CC #3 is not intended for cross carrier scheduling.

In Figure 4, when transmitting a PUSCH according to a UL grant including an A-CSI trigger through the serving cell in CC #1, the user terminal determines that the instruction is to transmit CSI of sets of serving cells in CCs #0-#4 if the A-CSI trigger value is "10", and determines that the instruction is to transmit CSI of sets of serving cells in CCs #5-#9 if the value is "11".

Meanwhile, when transmitting a PUSCH according to a UL grant including an A-CSI trigger through the serving cell in CC #2, the user terminal determines that the instruction is to transmit CSI of sets of serving cells in CCs #10-#14 if the A-CSI trigger value is "10", and determines that the instruction is to transmit CSI of sets of serving cells in CCs #15-# 19 if the value is "11".

Further, when transmitting a PUSCH according to a UL grant including an A-CSI trigger through the serving cell in CC #3, the user terminal determines that the instruction is to transmit CSI of sets of serving cells in CCs #20-#24 if the A-CSI trigger value is "10", and determines that the instruction is to transmit CSI of sets of serving cells in CCs #25-#29 if the value is "11".

Referring to Figure 4, a network (e.g., a radio base station) sends information that associates a serving cell (CC), the A-CSI trigger value, and a set of serving cells with each other, to the user terminal through higher-layer signaling such as RRC signaling. When transmitting a PUSCH designated by a UL grant including an A-CSI trigger from a serving cell, the user terminal determines CSI of which set of serving cells should be transmitted based on the A-CSI trigger value, in accordance with the information sent through higher-layer signaling.

Thus, even if the A-CSI triggers included in the UL grants have the same value (e.g., "10"), the user terminal determines that the instruction is to transmit CSI of different sets of serving cells, depending on through which serving cells a PUSCH designated by the UL grants is transmitted. Accordingly, in the case of uplink carrier aggregation, the number of sets of serving cells the CSI of which can be reported can be increased without increasing the number of bits of an A-CSI trigger.

As shown in Figure 4, if UL grants for CCs #1 and CC#2 intended for cross carrier scheduling starting from CC #1 each include an A-CSI trigger, Embodiment 1.2 determines that the instruction is to transmit CSI of different two sets of serving cells, whereas Embodiment 1.1 determines that the instruction is to transmit CSI of the same set of serving cells. Accordingly, Embodiment 1.2 can increase the number of sets of serving cells the CSI of which can be reported, even with uplink cross carrier scheduling.

### (Embodiment 1.3)

In aperiodic CSI reporting according to Embodiment 1.3, the user terminal transmits CSI of different sets of serving cells, depending on through which sub-frame a UL grant including an A-CSI trigger is received. A radio base station instructs to transmit CSI of different sets of serving cells by transmitting UL grants including A-CSI triggers in different sub-frames.

Aperiodic CSI reporting according to Embodiment 1.3 may use the time division duplex (TDD) scheme in which uplink and downlink transmission is switched at a predetermined time unit (e.g., sub-frame). In the TDD scheme, transmission may be performed according to a UL/DL configuration that defines the configuration of an uplink/downlink sub-frame included in a radio frame. Further, in the TDD scheme, the PUSCH of the uplink sub-frame following the downlink sub-frame is assigned through a UL grant transmitted in a downlink sub-frame.

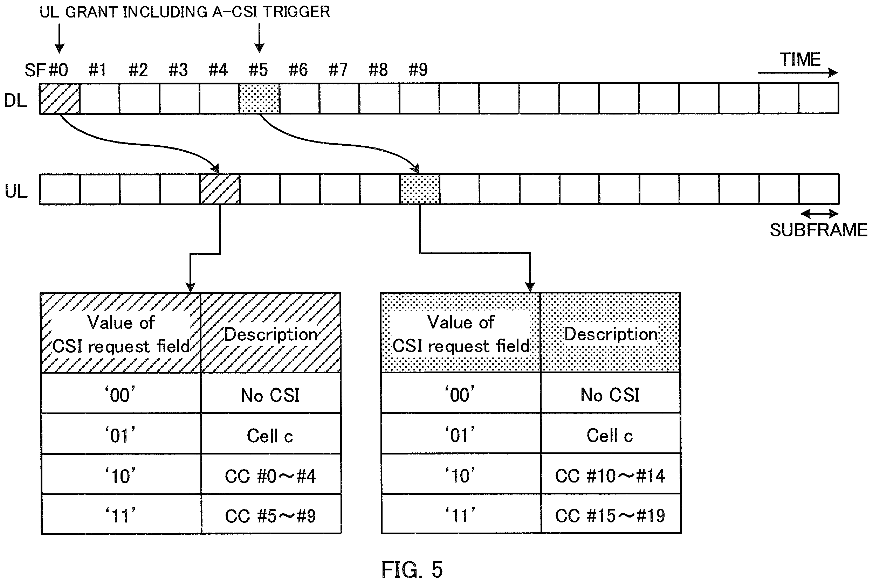

Figure 5 is a diagram for explaining an example of aperiodic CSI reporting according to Embodiment 1.3. Referring to Figure 5, when receiving (detecting) a UL grant including an A-CSI trigger at a sub-frame #0, the user terminal determines that the instruction is to transmit CSI of sets of serving cells, CCs #0 to #4, if the A-CSI trigger has a value of "10", and determines that the instruction is to transmit CSI of sets of serving cells, CCs #5 to #9, if the A-CSI trigger has a value of "11".

Meanwhile, when detecting a UL grant including an A-CSI trigger at a sub-frame #5, the user terminal determines that the instruction is to transmit CSI of sets of serving cells, CCs #10 to #14, if the A-CSI trigger has a value of "10", and determines that the instruction is to transmit CSI of sets of serving cells, CCs #15 to #19, if the A-CSI trigger has a value of "11".

Referring to Figure 5, a network (e.g., a radio base station) sends information that associates a sub-frame, the A-CSI trigger value, and a set of serving cells with each other, to the user terminal through higher-layer signaling such as RRC signaling. Upon detection of a UL grant including the A-CSI trigger at a sub-frame, the user terminal determines CSI of which set of serving cells should be transmitted based on the A-CSI trigger value, in accordance with the information sent through higher-layer signaling.

Thus, even if the A-CSI triggers included in the UL grants have the same value (e.g., "10"), the user terminal determines that the instruction is to transmit CSI of different sets of serving cells, depending on by which sub-frames the UL grants are detected. Accordingly, the number of sets of serving cells the CSI of which can be reported can be increased without increasing the number of bits of an A-CSI trigger. Consequently, the flexibility of aperiodic CSI reporting can be ensured even if the number of CCs (the number of serving cells) that can be allocated to each user terminal is increased to six or more.

### (Embodiment 1.4)

In aperiodic CSI reporting according to Embodiment 1.4, the user terminal transmits CSI of a different set of serving cells, depending on through which sub-frame a PUSCH designated by a UL grant including an A-CSI trigger is transmitted. A radio base station instructs to transmit CSI of different sets of serving cells by adding A-CSI triggers to UL grants to which PUSCHs of different sub-frames are assigned. Aperiodic CSI reporting according to Embodiment 1.4 can be used in the FDD and TDD schemes.

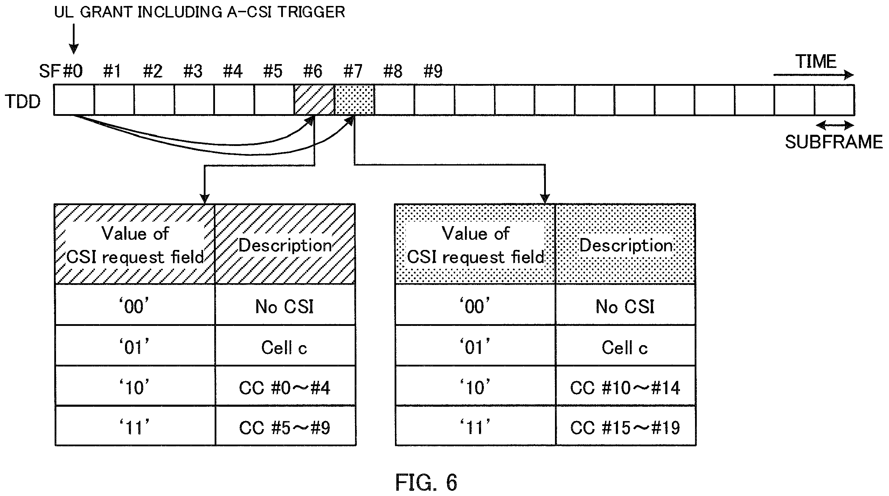

Figure 6 is a diagram for explaining an example of aperiodic CSI reporting according to Embodiment 1.4. In Figure 6, when transmitting a PUSCH according to a UL grant including an A-CSI trigger through a sub-frame #6, the user terminal determines that the instruction is to transmit CSI of sets of serving cells in CCs #0-#4 if the A-CSI trigger value is "10", and determines that the instruction is to transmit CSI of sets of serving cells in CCs #5-#9 if the value is "11".

Meanwhile, when transmitting a PUSCH according to a UL grant including an A-CSI trigger through a sub-frame #7, the user terminal determines that the instruction is to transmit CSI of sets of serving cells in CCs #10-#14 if the A-CSI trigger value is "10", and determines that the instruction is to transmit CSI of sets of serving cells in CCs #15-#19 if the value is "11".

Referring to Figure 6, a network (e.g., a radio base station) sends information that associates a sub-frame, the A-CSI trigger value, and a set of serving cells with each other, to the user terminal through higher-layer signaling such as RRC signaling. When transmitting a PUSCH designated by a UL grant including an A-CSI trigger from a sub-frame, the user terminal determines CSI of which set of serving cells should be transmitted based on the A-CSI trigger value, in accordance with the information sent through higher-layer signaling.

Thus, even if the A-CSI triggers included in the UL grants have the same value (e.g., "10"), the user terminal determines that CSI of different sets of serving cells should be transmitted, depending on through which sub-frames a PUSCH designated by the UL grants is transmitted. Accordingly, the number of sets of serving cells the CSI of which can be reported can be increased without increasing the number of bits of an A-CSI trigger.

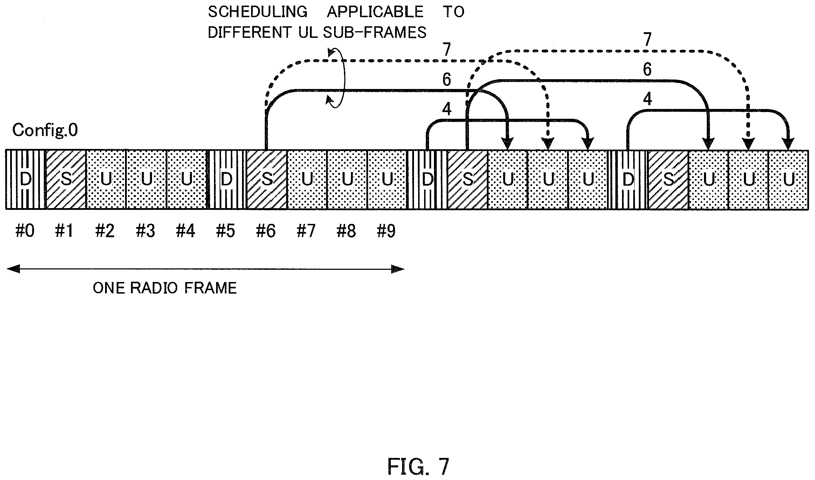

Accordingly, Embodiment 1.4 can increase the number of sets of serving cells the CSI of which can be reported, even with the UL/DL configuration #0 in the TDD system. Figure 7 is a diagram for explaining a UL/DL configuration #0. As shown in Figure 7, in the UL/DL configuration #0, the number of uplink sub-frames ("U") is set larger than that of downlink sub-frames ("D") in one radio frame. A special sub-frame ("S") is a sub-frame including a downlink transmission section (DwPTS) consisting of 3-12 OFDM symbols, and an uplink transmission section (UpPTS) consisting of 1-2 OFDM symbols, and can be regarded as a downlink sub-frame.

In the UL/DL configuration #0 shown in Figure 7, UL grants for instructing PUSCH transmission for a plurality of uplink sub-frames is transmitted with one downlink sub-frame. For example, in Figure 7, the UL grant transmitted through the sub-frame #6 instructs PUSCH transmission for two uplink sub-frames: the sixth and seventh sub-frames therefrom.

As shown in Figure 7, if UL grants for instructing PUSCH transmission for a plurality of uplink sub-frames is received by a single downlink sub-frame, Embodiment 1.4 determines that the instruction is to transmit CSI of different sets of serving cells, whereas Embodiment 1.3 determines that the instruction is to transmit CSI of the same set of serving cells. Accordingly, Embodiment 1.4 can increase the number of sets of serving cells the CSI of which can be reported, even when UL grants for instructing PUSCH transmission for a plurality of uplink sub-frames is received by a single downlink sub-frame as in the UL/DL configuration #0.

### (Embodiment 2)

In aperiodic CSI reporting according to Embodiment 2, upon reception of a UL grant including CSI transmission instruction, the user terminal transmits CSI of different sets of serving cells for a plurality of sub-frames. In this case, a radio base station instructs to transmit CSI of different sets of serving cells through a plurality of sub-frames in accordance with a single A-CSI trigger. Here, a plurality of sub-frames may be either a sequence of sub-frames or non-continuous sub-frames at predetermined time intervals. The frequency resource and MCS for PUSCHs for CSI transmission may be predetermined by higher-layer signaling, such as RRC, or designated by a UL grant. The frequency resource and MCS may be the same among a plurality of sub-frames the CSI of which are transmitted. Alternatively, different frequency resources and MCSs may be used for each of the plurality of sub-frames in accordance with predetermined rules. For example, use of different frequency resources for each of the plurality of sub-frames avoids the phenomenon in which not all the CSI is properly received, even when significant degradation due to phasing or other causes occurs in the frequency resource for transmission of a PUSCH through a particular sub-frame.

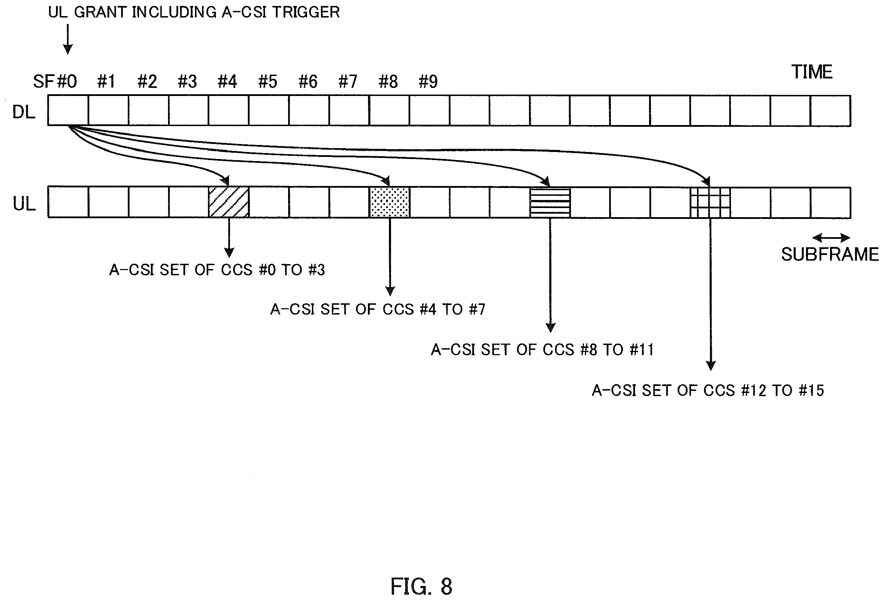

Figure 8 is a diagram for explaining an example of aperiodic CSI reporting according to Embodiment 2. In Figure 8, upon detection of a UL grant including an A-CSI trigger from the sub-frame #0, the user terminal transmits the CSI of different sets of serving cells (A-CSI sets) through the subsequent sub-frames at predetermined intervals (in Figure 8, 4ms).

Further, in Figure 8, if any PUSCH designated by another UL grant overlaps the CSI of different sets of serving cells transmitted at predetermined intervals, the PUSCH designated by the other UL grant may be a higher priority. Consequently, the radio base station can instruct to stop the transmission of the CSI of unnecessary sets of serving cells.

For example, in Figure 8, when the CSI of the sets of serving cells, CCs #8 to #11, are unnecessary, the radio base station designates the transmission of a PUSCH through a sub-frame overlapping the CSI of the sets of serving cells CC #8 to #11, by using another UL grant (e.g., a UL grant transmitted through the sub-frame #8). In this case, the PUSCH through the other UL grant is a higher priority than the CSI of the sets of serving cells CCs #8 to #11. In particular, the user terminal transmits the PUSCH according to the instruction through the other UL grant and stops the CSI transmission. Consequently, the radio base station can instruct to stop the transmission of the CSI of the unnecessary sets of serving cells, CCs #8 to #11.

The CSI of different sets of serving cells are transmitted through sub-frames intermittently at predetermined time intervals in Figure 8 but may be transmitted through a sequence of sub-frames instead. In Figure 8, either a 1-bit A-CSI trigger or 2-bit A-CSI trigger may be used. A network (e.g., a radio base station) may send information that indicates the CSI of which set of serving cells should be sent through which sub-frame (e.g., intervals between sub-frames and types of sub-frame sets), to the user terminal through higher-layer signaling such as RRC signaling.

In this manner, the user terminal transmits the CSI of different sets of serving cells through a plurality of sub-frames in accordance with a single A-CSI trigger. Accordingly, the number of sets of serving cells the CSI of which can be reported can be increased only if the radio base station instructs to transmit CSI through an A-CSI trigger. Consequently, the flexibility of aperiodic CSI reporting can be ensured without increasing the bit count of the A-CSI trigger even if the number of CCs (the number of serving cells) that can be allocated to each user terminal is increased to six or more.

### (Embodiment 3)

Aperiodic CSI reporting according to Embodiment 3 uses, in addition to a 2-bit A-CSI trigger, an A-CSI trigger with an increased bit count, i.e., three or more bits (hereinafter referred to as extended A-CSI trigger). To be specific, the radio base station instructs the user terminal to which six or more CCs can be allocated under carrier aggregation to transmit CSI through a UL grant including an extended A-CSI trigger.

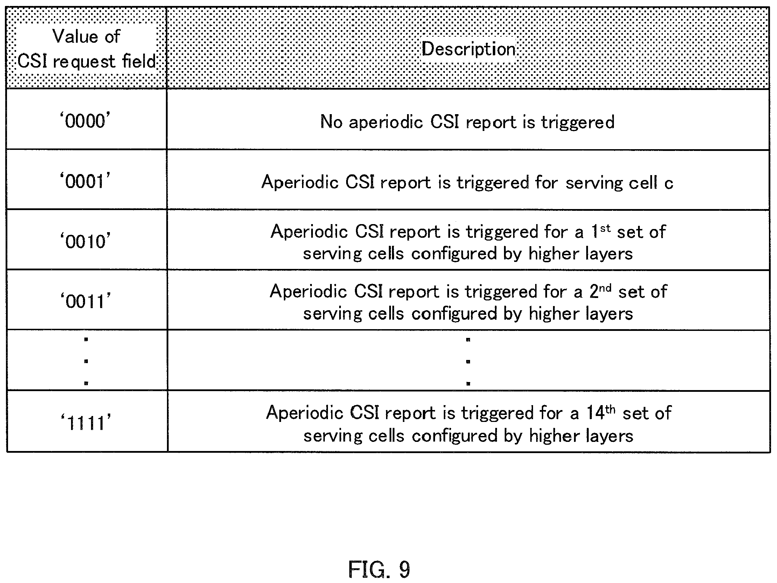

Figure 9 is a diagram for explaining an example of an extended A-CSI trigger. The bit count of the extended A-CSI trigger is four in Figure 9 but may be any number at or above three. As shown in Figure 9, a 4-bit extended A-CSI trigger instructs to transmit the CSI of 14 types of sets of serving cells by using the values "0010" and "1111". It should be noted that value assignment shown in Figure 9 is illustrative only.

Accordingly, with an extended A-CSI trigger, the number of sets of serving cells the CSI of which can be instructed to be transmitted can be increased from two (see Figure 2). Consequently, use of an extended A-CSI trigger ensures the flexibility of aperiodic CSI reporting even if the number of CCs (the number of serving cells) that can be allocated to each user terminal is increased to six or more.

In a user terminal specific search space (UE-SS), the user terminal may perform blind decoding either only on a downlink control signal (PDCCH) including an extended A-CSI trigger (see Figure 9) (Embodiment 3.1) or on both a PDCCH including a 2-bit A-CSI trigger (see Figure 2) and a PDCCH including an extended A-CSI trigger (Embodiment 3.2).

### (Embodiment 3.1)

In aperiodic CSI reporting according to Embodiment 3.1, if six or more CCs can be allocated under carrier aggregation, the user terminal performs blind decoding on a PDCCH including an extended A-CSI trigger instead of a PDCCH including a 2-bit A-CSI trigger in a UE-SS. In addition, the user terminal performs blind decoding on a PDCCH including a 1-bit A-CSI trigger in a common search space (C-SS).

For blind decoding in the UE-SS, the user terminal may switch from a PDCCH including an extended A-CSI trigger to a PDCCH including a 2-bit A-CSI trigger in accordance with a predetermined trigger. The predetermined trigger may be, for example, the situation where the number of CCs allocated by RRC or other higher-layer signaling is equal to or below that in CA defined by Rel.12 or earlier, or the situation where the number of CCs activated by MAC De-activation is equal to or below that in CA defined by Rel.12 or earlier. This facilitates a fallback from the extended A-CSI trigger to the A-CSI trigger according to LTE Rel.10-12 (see Figure 2).

### (Embodiment 3.2)

In aperiodic CSI reporting according to Embodiment 3.2, if six or more CCs can be allocated under carrier aggregation, the user terminal performs blind decoding on both an extended A-CSI trigger and a 2-bit A-CSI trigger in the UE-SS. In addition, the user terminal performs blind decoding on a 1-bit A-CSI trigger in a common search space (C-SS).

For blind decoding in the UE-SS, the user terminal may switch from both a 2-bit A-CSI trigger and an extended A-CSI trigger to only a 2-bit A-CSI trigger in accordance with a predetermined trigger. This facilitates a fallback to blind decoding in the UE-SS according to LTE Rel. 10-12 (i.e., blind decoding without an extended A-CSI trigger).

In Embodiment 3 described above, sets of serving cells designated by 2-bit A-CSI triggers and sets of serving cells designated by extended A-CSI triggers can be allocated to the user terminal all by higher-layer signaling, such as RRC. Alternatively, only sets of serving cells designated by extended A-CSI triggers may be allocated by higher-layer signaling, such as RRC, and sets of serving cells designated by a 2-bit A-CSI trigger may be two sections corresponding to 0010 and 0011 in Figure 9. In this case, different sets of serving cells need not to be allocated for the respective A-CSI triggers, so that the overhead of higher-layer signaling can be reduced.

In aperiodic CSI reporting according to Embodiment 3 (including Embodiments 3.1 and 3.2) described above, a radio base station may transmit a UL grant including an extended A-CSI trigger through a particular serving cell (CC) or a particular sub-frame which is different from that for a UL grant including a 2-bit A-CSI trigger.

In addition, the user terminal may perform blind decoding on an extended A-CSI trigger only through a particular serving cell (CC) or particular sub-frame. Information indicating a particular serving cell (CC) or particular sub-frame may be sent to the user terminal (configured) by higher-layer signaling, such as RRC. In this case, an increase in a processing load on the user terminal due to blind decoding of the extended A-CSI trigger has an impact only on a particular serving cell (CC) or particular sub-frame. Similarly, an increase in overhead due to the inclusion of the extended A-CSI trigger in the UL grant has an impact only on the specific sub-frame.

In aperiodic CSI reporting according to Embodiment 3, a radio base station may transmit a UL grant including an extended A-CSI trigger only through a particular physical downlink control channel. The user terminal may perform blind decoding on an extended A-CSI trigger through a particular physical downlink control channel.

Here, a particular physical downlink control channel may be an enhanced physical downlink control channel (EPDCCH) and is subjected to frequency division multiplexing with a PUSCH. A particular physical downlink control channel may be a UE-SS disposed at a PDCCH or EPDCCH. Alternatively, a particular physical downlink control channel may be either of the allocated two sets of EPDCCHs. It should be noted that a plurality of pairs of physical resource block (PRB) is assigned to each EPDCCH, and each EPDCCH set may consist of a different pair of PRB. A particular physical downlink control channel may be a particular aggregation level out of a plurality of aggregation levels (e.g., aggregation level =1, 2, 4, 8) for blind decoding.

In blind decoding of an extended A-CSI trigger through a particular physical downlink control channel, an increase in processing load on the user terminal due to blind decoding of the extended A-CSI trigger has an impact only on the particular physical downlink control channel. Similarly, an increase in overhead due to the inclusion of the extended A-CSI trigger in the UL grant has an impact only on the particular physical downlink control channel.

### (Configuration of radio communication system)

The configuration of a radio communication system according to this embodiment will now be described. This radio communication system employs a radio communication method in which aperiodic CSI reporting is performed according to Embodiment 1-3.

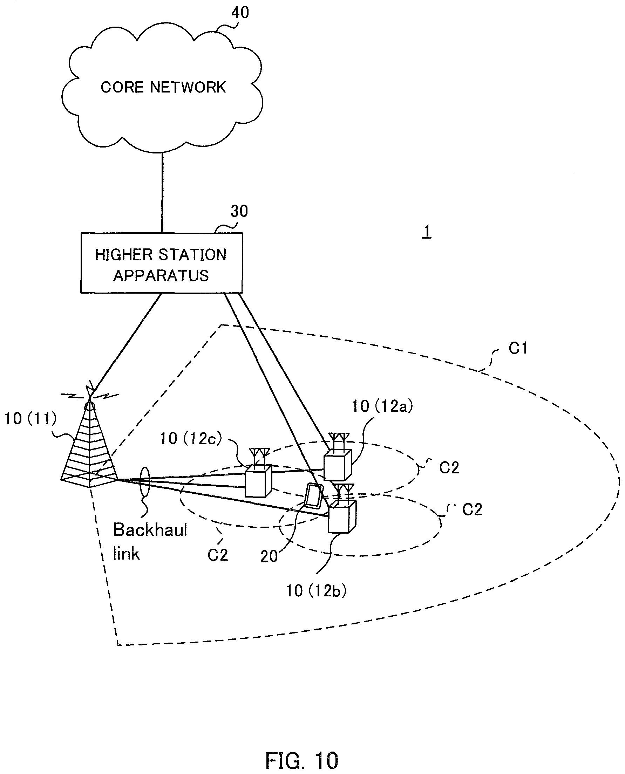

Figure 10 is a diagram showing an example schematic configuration of a radio communication system according to this embodiment. This radio communication system can employ carrier aggregation that unites a plurality of basic frequency blocks (component carriers) using a system band width for an LTE system as one unit. Moreover, this radio communication system may include radio base stations that can use not only licensed bands but also unlicensed bands.

As shown in Figure 10, a radio communication system 1 includes a plurality of radio base stations 10 (11 and 12) and a plurality of user terminals 20 in cells formed by the radio base stations 10 and configured to communicate with the radio base stations 10. The radio base stations 10 are connected to a higher station apparatus 30 and to a core network 40 via the higher station apparatus 30.

Referring to Figure 10, the radio base station 11 is a macro base station with relatively high coverage, forming a macro cell C1. The radio base stations 12 are small base stations with low coverage, forming small cells C2. It should be noted that the number of the radio base stations 11 and 12 is not limited that in Figure 10.

For example, the macro cells C1 may be operated in licensed bands, and the small cells C2 in unlicensed bands. Alternatively, part of the small cells C2 may be operated in unlicensed bands, and the rest of the small cells C2 in licensed bands. The radio base stations 11 and 12 are connected to each other via an inter-BS interface (e.g., optical fiber, X2 interface).

The user terminal 20 can be connected to both the radio base station 11 and the radio base stations 12. The user terminal 20 is assumed to use the macro cell C1 and the small cells C2, which use different frequencies, at the same time by carrier aggregation. For example, the radio base station 11 using a licensed band can transmit assistance information (e.g., downlink signal configuration) on the radio base stations 12 using an unlicensed band, to the user terminal 20. To achieve carrier aggregation between a licensed band and an unlicensed band, one radio base station (e.g., the radio base station 11) may control the schedules of licensed band cells and unlicensed band cells.

The user terminal 20 may be connected not to the radio base station 11 but to the radio base stations 12. For example, the radio base stations 12 using an unlicensed band may be connected to the user terminal 20 in a standalone manner. In this case, the radio base stations 12 control the schedules of the unlicensed band cells.

Examples of the higher station apparatus 30 include, but should not be limited to, access gateway devices, radio network controllers (RNCs), and mobility management entities (MMEs).

Examples of the downlink channels used in the radio communication system 1 include physical downlink shared channels (PDSCHs) shared among the user terminal 20, downlink control channels (physical downlink control channels (PDCCHs) and enhanced physical downlink control channels (EPDCCHs)), and physical broadcast channels (PBCHs). User data, higher layer control information, and predetermined system information blocks (SIBs) are transmitted through PDSCHs. Downlink control information (DCI) is transmitted through PDCCHs or EPDCCHs.

Examples of the uplink channels used in the radio communication system 1 include physical uplink shared channels (PUSCHs) shared among the user terminal 20 and physical uplink control channels (PUCCHs). User data and higher layer control information are transmitted through PUSCHs.

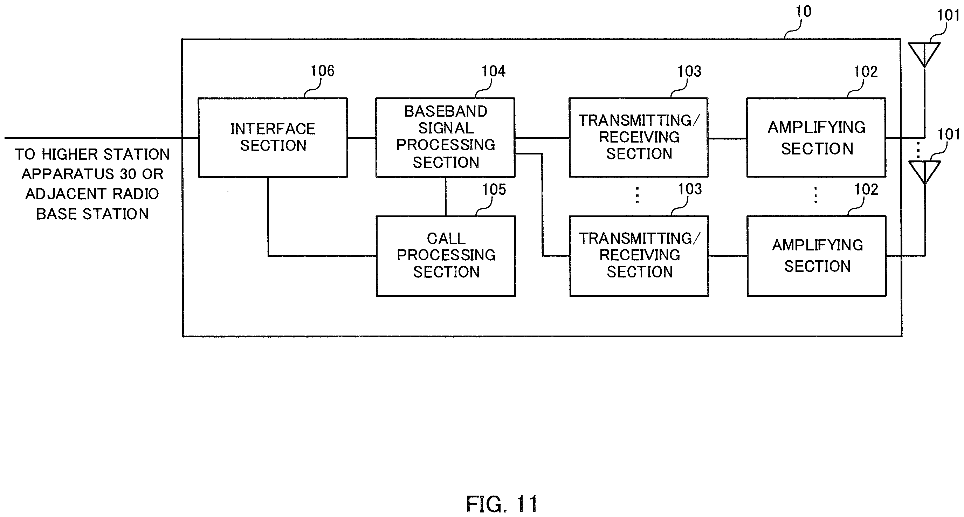

Figure 11 is a diagram showing an overall configuration of the radio base station 10 according to this embodiment. As shown in Figure 11, the radio base station 10 includes a plurality of transmitting/receiving antennas 101 for multiple-input and multiple-output (MIMO) transmission, amplifying sections 102, transmitting/receiving sections (transmitting sections and receiving sections) 103, a baseband signal processing section 104, a call processing section 105, and an interface section 106.

User data transmitted from the radio base station 10 to the user terminal 20 through the downlink channel is input from the higher station apparatus 30 to the baseband signal processing section 104 through the interface section 106.

The baseband signal processing section 104 performs packet data convergence protocol (PDCP) layer processing, user data division/combination, transmission processing for an RLC layer, such as transmission processing for radio link control (RLC) resend control, medium access control (MAC) resend control, such as transmission processing, scheduling, transmission format selection, channel coding, inverse fast Fourier transform (IFFT) processing, and pre-coding for hybrid automatic repeat request (HARQ), and transfers the results to each transmitting/receiving section 103. Downlink control signals are also subjected to transmission processing, such as channel coding and inverse fast Fourier transform, and the results are transferred to each transmitting/receiving section 103.

Each transmitting/receiving section 103 converts a downlink signal, which is pre-coded for the corresponding antenna and output from the baseband signal processing section 104, to a radio frequency signal. Each amplifying section 102 amplifies the radio frequency signal generated by frequency conversion and transmits it through the corresponding transmitting/receiving antenna 101. Each transmitting/receiving section 103 is a transmitter/receiver, a transmitting/receiving circuit, or a transmitting/receiving device based on common understanding within the technical field of the present invention.

The transmitting/receiving section 103 transmits downlink signals and receives uplink signals. To be specific, the transmitting/receiving section 103 transmits downlink control signals generated in a downlink control signal generating section 302, downlink data signals generated in a downlink data signal generating section 303, and downlink reference signals generated in a downlink reference signal generating section 304, which will be described later. The transmitting/receiving section 103 receives uplink control signals generated in an uplink control signal generating section 402 and uplink data signals generated in an uplink data signal generating section 403, which will be described later.

As for uplink signals, a radio frequency signal received at each transmitting/receiving antenna 101 is amplified by the corresponding amplifying section 102, frequency-converted in the corresponding transmitting/receiving section 103 for conversion to a baseband signal, and then input to the baseband signal processing section 104.

In the baseband signal processing section 104, user data in the received uplink signal is subjected to fast Fourier transform (FFT) processing, inverse discrete Fourier transform (IDFT) processing, error correction decoding, reception processing for MAC resend control, and reception processing for RLC layers and PDCP layers, and then transferred to the higher station apparatus 30 through the interface section 106. The call processing section 105 performs call processing, such as communication channel allocation and release, management of the radio base station 10, and management of the radio resource.

The interface section 106 transmits/receives signals (backhaul signaling) to/from the adjacent radio base station through an inter-BS interface (e.g., optical fiber and X2 interface). Alternatively, the interface section 106 transmits/receives signals to/from the higher station apparatus 30 through a predetermined interface.

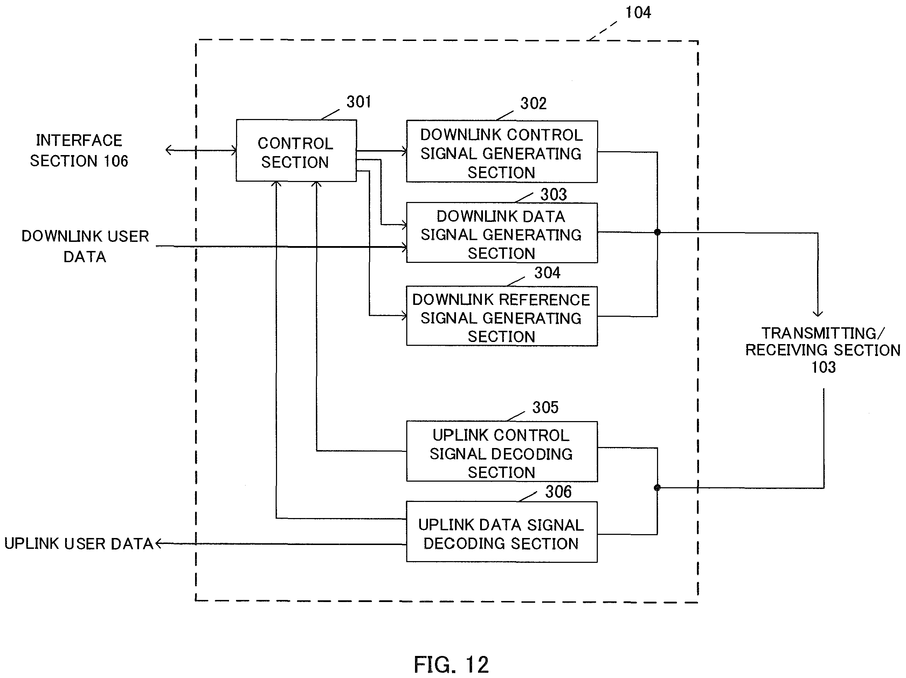

Figure 12 is a diagram showing a main functional configuration of the baseband signal processing section 104 included in the radio base station 10 according to this embodiment. As shown in Figure 12, the baseband signal processing section 104 included in the radio base station 10 includes at least a control section 301, a downlink control signal generating section 302, a downlink data signal generating section 303, a downlink reference signal generating section 304, an uplink control signal decoding section 305, and an uplink data signal decoding section 306.

The control section 301 controls assignment of downlink data signals (PDSCH signals) for downlink user data and uplink data signals (PUSCH signals) for uplink user data in accordance with instructions from the higher station apparatus 30 and feedback information from the user terminal 20. Thus, the control section 301 serves as a scheduler.

In addition, the control section 301 controls the allocation of component carriers (CCs) to each user terminal 20 in accordance with feedback information (e.g., CSI) from the user terminal 20. The control section 301 is a controller, a control circuit, or a control device based on common understanding within the technical field of the present invention.

The control section 301 also controls CSI transmission instruction (A-CSI trigger) for aperiodic CSI reporting. To be specific, the control section 301 may instruct to transmit the CSI of a different set of serving cells in accordance with an uplink scheduling grant (UL grant) including an A-CSI trigger (Embodiment 1).

For example, the control section 301 may instruct to transmit the CSI of a different set of serving cells depending on through which serving cell (Embodiment 1.1) or sub-frame (Embodiment 1.3) a UL grant is transmitted. In this case, the control section 301 may instruct the downlink control signal generating section 302 to transmit a UL grant including an A-CSI trigger through a serving cell or sub-frame associated with the target set of serving cells.

Further, the control section 301 may instruct to transmit the CSI of a different set of serving cells depending on through which serving cell (Embodiment 1.2) or sub-frame (Embodiment 1.4) a PUSCH indicated by a UL grant is transmitted. In this case, the control section 301 may instruct the downlink control signal generating section 302 to assign a PUSCH to a serving cell or sub-frame associated with the target set of serving cells, and to put an A-CSI trigger in the UL grant indicating this assignment.

Further, the control section 301 may instruct to transmit the CSI of different sets of serving cells for a plurality of sub-frames with a single A-CSI trigger (Embodiment 2). The control section 301 may instruct to transmit the CSI of different sets of serving cells for a plurality of sub-frames with a three-or-more bit extended A-CSI trigger (Embodiment 3).

The downlink control signal generating section 302 generates downlink control signals (at least one of PDCCH signals and EPDCCH signals) in accordance with instructions from the control section 301, and performs transmission processing, such as coding, modulation, and mapping. A downlink control signal generated by the downlink control signal generating section 302 includes downlink assignment indicating PDSCH assignment, and a UL grant indicating PUSCH assignment by the control section 301.

The UL grant may include either a 1-bit or 2-bit A-CSI trigger (Embodiments 1 and 2) or 3-bit-or more extended A-CSI trigger (Embodiment 3) depending on the instruction from the control section 301. The downlink control signal generating section 302 may put an extended A-CSI trigger in an UL grant only through a particular serving cell (CC), a particular sub-frame, or a particular physical downlink control channel (Embodiment 3).

The downlink data signal generating section 303 generates downlink data signals (PDSCH signals) in accordance with assignment by the control section 301, and performs transmission processing, such as coding, modulation, and mapping. A downlink data signal generated by the downlink data signal generating section 303 includes downlink user data and higher layer control information sent (configured) through higher-layer signaling such as RRC signaling.

Higher layer control information includes information indicating a CC allocated to the user terminal 20 and information indicating serving cells in each set of serving cells. In addition, higher layer control information may include information associating a serving cell, an A-CSI trigger value, and a set of serving cells (Embodiments 1.1 and 1.2) or information associating a sub-frame, an A-CSI trigger value, and a set of serving cells (Embodiments 1.3 and 1.4).

The downlink reference signal generating section 304 generates downlink reference signals in accordance with instructions from the control section 301. A downlink reference signal includes a channel state information reference signal (CSI-RS) for use in measurement of CSI in the user terminal 20.

A downlink control signal generated by the downlink control signal generating section 302, a downlink data signal generated by the downlink data signal generating section 303, and the downlink reference signal generating section 304 are mapped to a predetermined radio resource (e.g., a physical resource block (PRB), PRB pair, or resource element (RE)) and then fed to the transmitting/receiving section 103. The downlink control signal generating section 302, the downlink data signal generating section 303, and the downlink reference signal generating section 304 may be a signal generator or a signal generating circuit based on common understanding within the technical field of the present invention.

The uplink control signal decoding section 305 receives an uplink control signal (a PUCCH signal) separated from an uplink signal received at the transmitting/receiving section 103. The uplink control signal decoding section 305 decodes feedback information contained in the uplink control signal (e.g., ACK/NACK or other arrival confirmation information) and feeds it to the control section 301.

The uplink data signal decoding section 306 receives an uplink data signal (a PUSCH signal) separated from an uplink signal received at the transmitting/receiving section 103. The uplink data signal decoding section 306 decodes uplink user data and feedback information contained in the uplink data signal. Feedback information decoded by the uplink data signal decoding section 306 includes CSI transmitted in accordance with at least one of an A-CSI trigger and an extended A-CSI trigger described above. The uplink data signal decoding section 306 outputs the decoded feedback information to the control section 301.

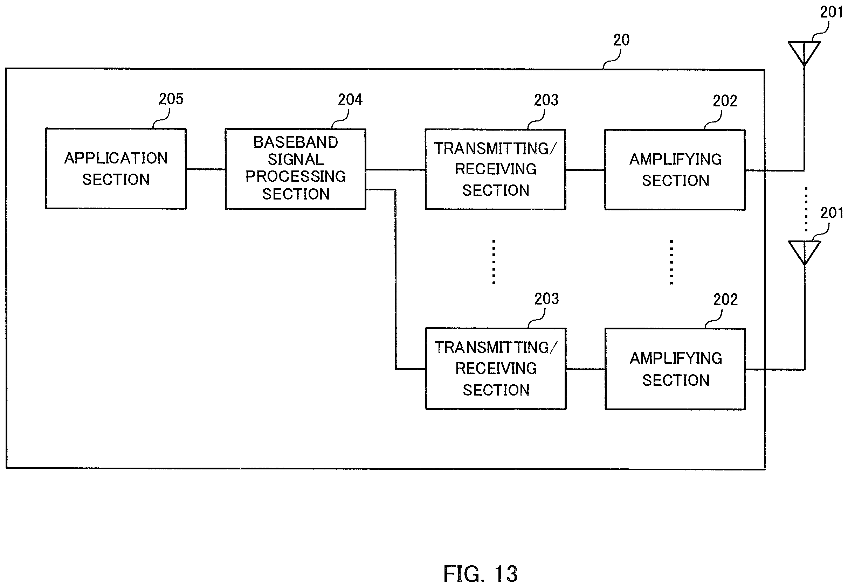

Figure 13 is a diagram showing an overall configuration of the user terminal 20 according to this embodiment. As shown in Figure 13, the user terminal 20 includes a plurality of transmitting/receiving antennas 201 for MIMO transmission, amplifying sections 202, transmitting/receiving sections (transmitting sections and receiving sections) 203, a baseband signal processing section 204, and an application section 205.

For a downlink signal, radio frequency signals received at a plurality of transmitting/receiving antennas 201 are amplified by the respective amplifying sections 202, frequency-converted in the respective transmitting/receiving sections 203 for conversion to baseband signals. These baseband signals are subjected to FFT processing, error correction decoding, resend control reception processing, and the like in the baseband signal processing section 204. Downlink user data in this downlink signal is transferred to the application section 205. The application section 205 performs processing related to layers higher than physical layers and MAC layers. Each transmitting/receiving section 203 is a transmitter/receiver, a transmitting/receiving circuit, or a transmitting/receiving device based on common understanding within the technical field of the present invention.

Meanwhile, uplink user data is input from the application section 205 to the baseband signal processing section 204. The baseband signal processing section 204 performs resend control (HARQ) transmission processing, channel coding, pre-coding, discrete Fourier transform (DFT) processing, inverse fast Fourier transform (IFFT) processing, and the like, and the results are transferred to each transmitting/receiving section 203. Each transmitting/receiving section 203 converts a baseband signal, which is output from the base band signal processing section 204, to a radio frequency signal. Subsequently, each amplifying section 202 amplifies the frequency-converted radio frequency signal which is then transmitted through the corresponding transmitting/receiving antenna 201.

The transmitting/receiving section 203 receives downlink signals and transmits uplink signals. To be specific, it receives aforementioned downlink control signals generated in a downlink control signal generating section 302, downlink data signals generated in a downlink data signal generating section 303, and downlink reference signals generated in a downlink reference signal generating section 304. The transmitting/receiving section 203 transmits uplink control signals generated in an uplink control signal generating section 402 and uplink data signals generated in an uplink data signal generating section 403, which will be described later.

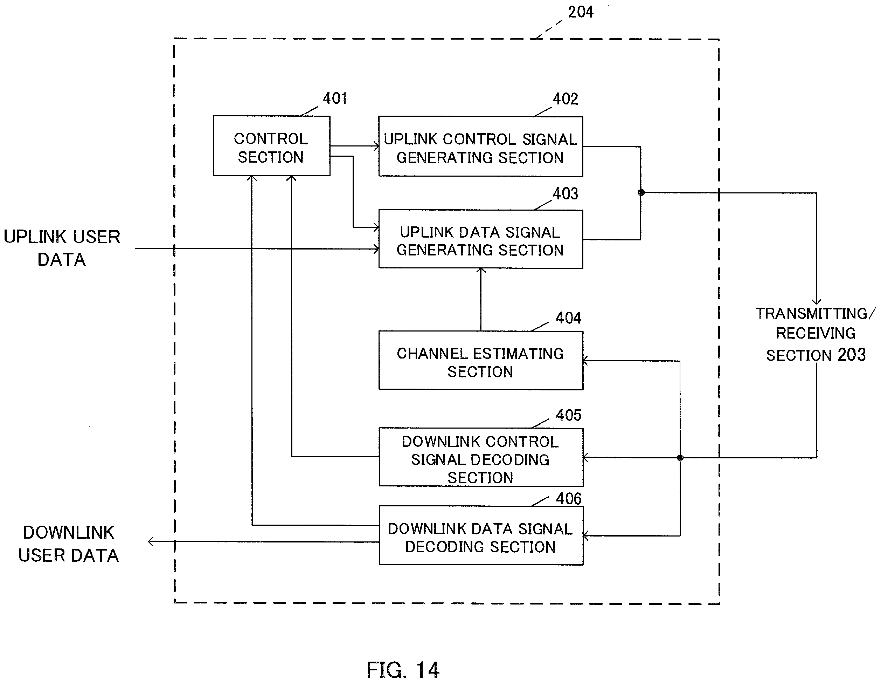

Figure 14 is a diagram showing a main functional configuration of the baseband signal processing section 204 included in the user terminal 20. As shown in Figure 14, the baseband signal processing section 204 included in the user terminal 20 includes at least a control section 401, an uplink control signal generating section 402, an uplink data signal generating section 403, a channel estimating section 404, a downlink control signal decoding section 405, and a downlink data signal decoding section 406.

The control section 401 controls generation of uplink control signals (PUCCH signals) and uplink data signals (PUSCH signals) on the basis of downlink control signals (PDCCH signals, EPDCCH signals) transmitted from the radio base station 10. The control section 401 is a controller, a control circuit, or a control device based on common understanding within the technical field of the present invention.

The control section 401 also controls communication with the radio base station 10 using the serving cells in six or more CCs. CCs for communication with the radio base station 10 are allocated (configured) by the radio base station 10.

The control section 401 also controls transmission of CSI during aperiodic CSI reporting. To be specific, the control section 401 controls the uplink data signal generating section 403 (Embodiment 1) such that the CSI of different sets of serving cells are transmitted based on an uplink scheduling grant (UL grant) including an A-CSI trigger.

For example, the control section 401 may instruct the uplink data signal generating section 403 to transmit the CSI of a different set of serving cells depending on through which serving cell (Embodiment 1.1) or sub-frame (Embodiment 1.3) a UL grant is received. In particular, the control section 401 may instruct the uplink data signal generating section 403 to transmit the CSI of a set of serving cells which is associated with a serving cell or sub-frame through which the UL grant is received.

Further, the control section 401 may instruct the uplink data signal generating section 403 to transmit the CSI of a different set of serving cells depending on through which serving cell (Embodiment 1.2) or sub-frame (Embodiment 1.4) a PUSCH indicated by the UL grant is transmitted. In particular, the control section 401 may instruct the uplink data signal generating section 403 to transmit the CSI of a set of serving cells which is associated with a serving cell or sub-frame through which the PUSCH is transmitted.

The control section 401 may also instruct the uplink data signal generating section 403 to transmit the CSI of different sets of serving cells through a plurality of sub-frames in accordance with a single A-CSI trigger (Embodiment 2). The control section 401 may instruct the uplink data signal generating section 403 to transmit the CSI of a set of serving cells indicated by a three-or-more bit extended A-CSI trigger (Embodiment 3).

The uplink control signal generating section 402 generates uplink control signals (PUCCH signals) in accordance with instructions from the control section 401, and performs transmission processing, such as coding, modulation, and mapping. An uplink control signal generated by the uplink control signal generating section 402 includes feedback information (e.g., downlink data signal (a PDSCH signal) arrival confirmation information (ACK/NACK)) for the radio base station 10.

The uplink data signal generating section 403 generates uplink data signals (PUSCH signals) in accordance with instructions from the control section 401, and performs transmission processing, such as coding, modulation, and mapping. An uplink data signal generated by the uplink data signal generating section 403 may include, in addition to uplink user data, feedback information for the radio base station 10. This feedback information includes downlink data signal (PDSCH signal) arrival confirmation information (ACK/NACK) and CSI reported during the aperiodic CSI reporting.

An uplink control signal generated by the uplink control signal generating section 402 and an uplink data signal generated by the uplink data signal generating section 403 are mapped to a predetermined radio resource (e.g., a PRB, PRB pair, or resource element (RE)) and then fed to the transmitting/receiving section 203. The uplink control signal generating section 402 and the uplink data signal generating section 403 may be a signal generator or a signal generating circuit based on common understanding within the technical field of the present invention.

The channel estimating section 404 receives downlink reference signals (e.g., CSI-RS) separated from downlink signals received at the transmitting/receiving section 203. The channel estimating section 404 estimates the channel states of the serving cells in each CC on the basis of downlink reference signals. The channel estimating section 404 generates channel state information(CSI) indicating the estimated channel states and feed them to the uplink data signal generating section 403.

The downlink control signal decoding section 405 receives downlink control signals (PDCCH signals, EPDCCH signals) separated from downlink signals received at the transmitting/receiving section 203. The downlink control signal decoding section 405 performs blind decoding on downlink control signals in accordance with a predetermined DCI format and feeds the detected UL grant to the control section 401.

In particular, the downlink control signal decoding section 405 performs blind decoding on a 1-bit A-CSI trigger in a common search space (C-SS). In addition, the downlink control signal decoding section 405 performs blind decoding on a 2-bit A-CSI trigger in a user terminal specific search space (UE-SS) (Embodiments 1 and 2). The downlink control signal decoding section 405 may perform blind decoding on a 3-bit-or more extended A-CSI trigger in a UE-SS (Embodiment 3). In this case, in the UE-SS, the downlink control signal decoding section 405 may perform blind decoding either only on an extended A-CSI trigger (Embodiment 3.1) or on both a 2-bit A-CSI trigger and an extended A-CSI trigger (Embodiment 3.2). The downlink control signal decoding section 405 may perform blind decoding on an extended A-CSI trigger only through a particular serving cell (CC), a particular sub-frame, or a particular physical downlink control channel.

The downlink data signal decoding section 406 receives a downlink data signal (a PDSCH signal) separated from a downlink signal received at the transmitting/receiving section 203. The downlink data signal decoding section 406 decodes downlink user data and higher layer control information included in the downlink data signal. The higher layer control information is fed to the control section 401.

It should be noted that the present invention is not limited to the above embodiments and various modifications can be made for its implementation. In the above embodiments, the sizes and shapes are not limited to those shown in the attached drawings and can be modified in various ways without departing from a range in which the advantageous effects of the present invention can be obtained. Aside from that, various modifications can be made without departing from the scope of the present invention.

This application claims priority to Japanese Patent Application No.2015-015924 filed on January 29, 2015 which is herein incorporated by reference.

Further embodiments are as follows:
E1. A user terminal for communication with a radio base station through a plurality of serving cells in different component carriers, comprising:
   a receiving section that receives an uplink scheduling grant including an instruction to transmit channel state information of a cell set of at least one serving cell; and
   a transmitting section that transmits channel state information of a different cell set through a physical uplink shared channel designated by the uplink scheduling grant, depending on the uplink scheduling grant.
E2. The user terminal according to embodiment E1, wherein the transmitting section transmits channel state information of a different cell set depending on through which serving cell the uplink scheduling grant is received.
E3. The user terminal according to embodiment E1, wherein the transmitting section transmits channel state information of a different cell set depending on through which serving cell the physical uplink shared channel designated by the uplink scheduling grant is transmitted.
E4. The user terminal according to embodiment E1, wherein the transmitting section transmits channel state information of a different cell set depending on through which sub-frame the uplink scheduling grant is received.
E5. The user terminal according to embodiment E1, wherein the transmitting section transmits channel state information of a different cell set depending on through which sub-frame the physical uplink shared channel designated by the uplink scheduling grant is transmitted.
E6. The user terminal according to any one of embodiments E1 to E5, wherein the receiving section receives information indicating the different cell set through higher-layer signaling.
E7. The user terminal according to any one of embodiments E1 to E6, wherein the different component carriers are six or more component carriers.
E8. A radio base station for communication with user terminal through a plurality of serving cells in different component carriers, comprising:
   a transmitting section that transmits an uplink scheduling grant including an instruction to transmit channel state information of a cell set of at least one serving cell; and
   a receiving section that receives channel state information of a different cell set transmitted through a physical uplink shared channel designated by the uplink scheduling grant, depending on the uplink scheduling grant.
E9. A radio communication system for communication between a radio base station and a user terminal through a plurality of serving cells in different component carriers, wherein
   the radio base station transmits an uplink scheduling grant including an instruction to transmit channel state information of a cell set of at least one serving cell, and
   the user terminal transmits channel state information of a different cell set through a physical uplink shared channel designated by the uplink scheduling grant, depending on the uplink scheduling grant.
E10. A radio communication method for communication between a radio base station and a user terminal through a plurality of serving cells in different component carriers, the method comprising the steps of:
   transmitting, from the radio base station, an uplink scheduling grant including an instruction to transmit channel state information of a cell set of at least one serving cell; and
   transmitting, from the user terminal, channel state information of a different cell set through a physical uplink shared channel designated by the uplink scheduling grant, depending on the uplink scheduling grant.

## Claims

1. A user terminal (20) comprising:
a receiving section (203) that receives an indication to transmit channel state information (CSI) of at least one serving cell; and
a transmitting section (203) that transmits the CSI based on the indication to transmit the CSI,
wherein if the user terminal is configured with six or more cells, the receiving section receives a specific downlink control channel including more than two bits of CSI triggering in a user terminal-specific search space of the specific downlink control channel configured by a radio base station and performs blind decoding, and the receiving section receives a downlink control channel including one bit of CSI triggering in a common search space.

2. The user terminal according to claim 1, wherein the receiving section receives the downlink control channel including the more than two bits of CSI triggering in the user terminal-specific search space, based on a given triggering, instead of receiving a downlink control channel including two bits of CSI triggering.

3. A radio communication system comprising:
a radio base station (10) comprising a transmitting section that transmits an indication to transmit channel state information (CSI) of at least one serving cell; and
a user terminal (20) comprising a transmitting section that transmits the CSI based on the indication to transmit the CSI,
wherein if the user terminal is configured with six or more cells, the user terminal receives a specific downlink control channel including more than two bits of CSI triggering in a user terminal-specific search space of the specific downlink control channel configured by the radio base station and performs blind decoding, and the user terminal receives a downlink control channel including one bit of CSI triggering in a common search space.

4. A radio communication method comprising:
transmitting, by a radio base station, an indication to transmit channel state information (CSI) of at least one serving cell; and
transmitting, by a user terminal, the CSI based on the indication to transmit the CSI,
wherein if the user terminal is configured with six or more cells, the user terminal receives a specific downlink control channel including more than two bits of CSI triggering in a user terminal-specific search space of the specific downlink control channel configured by the radio base station and performs blind decoding, and the user terminal receives a downlink control channel including one bit of CSI triggering in a common search space.
